# FASCICULE DE BREVET EUROPEEN

(11) **EP 2 786 274 B1**
(45) Date de publication et mention de la délivrance du brevet: **08.05.2019**
(21) Numéro de dépôt: 12806586.9
(22) Date de dépôt: 28.11.2012
(51) Int. Cl.: G06F 17/30

(54) **PROCEDE D'INTERROGATION DE BASE DE DONNEES**
VERFAHREN ZUR DATENBANKABFRAGE
METHOD OF DATABASE QUERYING

(30) Priorité: 29.11.2011 FR 1160914
(43) Date de publication de la demande: 08.10.2014
(73) Titulaire: Bull SAS, 78340 Les Clayes-sous-Bois (FR)
(72) Inventeur: BOTALLA, Myriam, F-38000 Grenoble (FR); CHEINET, Mireille, F-38120 Saint Egreve (FR); GERPHAGNON, Jean-Olivier, F-38180 Seyssins (FR)
(74) Mandataire: Santarelli
(86) Numéro de dépôt international: PCT/FR2012/052737
(87) Numéro de publication internationale: WO 2013/079867

(56) Documents cités:
- WO-A1-91/12580
- SCIORE ET AL: "Query abbreviation in the Entity-Relationship data model", INFORMATION SYSTEMS, PERGAMON PRESS, OXFORD, GB, vol. 19, no. 6, 1 septembre 1994 (1994-09-01), pages 491-511, XP024234339, ISSN: 0306-4379, DOI: 10.1016/0306-4379(94)90003-5 [extrait le 1994-09-01]

## Description

La présente invention concerne le domaine des bases de données. Elle concerne plus particulièrement le mode d'interrogation de celles-ci pour en extraire des informations.

Afin de stocker des informations en grand nombre et de manière optimale en ce qui concerne l'utilisation des ressources mémoire, les développeurs de bases de données doivent concevoir des structures de base de données complexes. Les structures de base de données diffèrent selon l'application.

Par exemple, dans le cas des bases de données relationnelles, le développeur doit notamment choisir les tables à créer, leurs attributs, les clés primaires, les clés secondaires et les associations entre les tables.

Afin d'accéder à une information dans une base de données, un utilisateur doit typiquement connaître la structure de la base de donnée pour formuler une requête dans un langage plus ou moins complexe. Un tel langage est par exemple SQL (sigle de « *Structured Query Language* » en anglais).

Afin de mettre à jour de telles bases de données ou d'opérer des opérations de maintenance, des systèmes de gestion de base de données (SGBD) leur sont associées.

L'utilisation et la gestion des données contenues dans les SGBD (y compris la base de données) sont, dans certains cas, réalisées par des administrateurs dont la tâche première est de s'occuper de l'environnement système dans sa globalité (c'est-à-dire le système incluant le SGBD lui-même). L'utilisation des informations présentes dans la, ou les, bases de données permet par exemple de connaître l'état d'un réseau, les machines disponibles, l'activité présente et passée du système ou autre.

Les administrateurs système sont en charge, non pas de l'administration de la partie SGBD, mais bien de l'environnement qui la contient, ils n'ont généralement pas comme activité principale la maîtrise de l'ensemble complexe que constitue le SGBD.

Ces utilisateurs du SGBD ont besoin d'accéder aux informations sans avoir à connaître la structure de la base de données ni l'ensemble des règles régissant les données stockées dans celle-ci.

La mise en oeuvre de librairies et d'API (sigle de « *Application Programming Interface* » en anglais) spécialisées ne semble pas constituer une solution satisfaisante étant donné qu'elles nécessitent un apprentissage relativement long et difficile pour l'utilisateur. En outre, une API est généralement basée sur une librairie proposant une liste bornée de fonctions et procédures qui peut-être extrêmement longue et dont les paramètres sont parfois complexes à intégrer. Cette solution est donc rigide car la liste des primitives fournies n'est pas modifiable par l'utilisateur final qui, s'il ne trouve pas celle qui correspond à son besoin, devra, soit la développer, soit demander à ce qu'elle soit développée, soit combiner de multiples primitives afin d'obtenir le résultat escompté. Cela peut se produire en particulier lorsqu'une recherche d'informations fait appel à plusieurs tables de la base de manière simultanée (« requêtes multi-tables »).

Le document "QUERY ABREVIATION IN THE ENTITY-RELATIONSHIP DATA MODEL", Information Systems Vol. 19, No. 6, pp 491-511, 1994 Pergamon Press, ISSN 0306-4379, concerne l'utilisation de déductions contextuelles pour interpréter des requêtes par un processeur. À ce but, le document vise à permettre l'utilisation de requêtes abrégées afin de simplifier la tâche à un utilisateur. À cet effet, le document propose de permettre à l'utilisateur de faire des requêtes avec des liens implicites entre différentes classes de données. Des algorithmes « d'expansion » des requêtes abrégées sont divulgués, mais le document est silencieux sur la représentation restreinte aux objets d'une recherche.

Il existe donc un besoin pour obtenir des informations d'une base de données de manière simple et flexible simple afin de s'affranchir de langages spécifiques dédiés aux environnements de base de données et nécessitant une connaissance pointue de la structure de la base de données.

Un **premier aspect** de l'invention concerne un procédé d'interrogation d'une base de données par des moyens informatiques comportant les étapes suivantes:
- de réception d'une première requête dans un premier langage visant l'obtention d'informations contenues dans la base de données, ladite requête visant au moins un objet ayant au moins une propriété représentée dans la base de données,
- d'accès à une représentation de la base de données restreinte audit au moins un objet,
- de génération, à partir de ladite représentation et de ladite au moins une propriété de la première requête, d'au moins une deuxième requête dans un deuxième langage visant à obtenir les informations requises dans la première requête, et
- d'interrogation de la base de données au moyen de ladite au moins une deuxième requête.

L'utilisation d'une représentation partielle de la base de données limitée à un objet au sujet duquel des informations sont requises permet de s'affranchir de l'étape préalable consistant à extraire de la base de données les tables permettant de formuler une requête pertinente.

Afin de simplifier l'interrogation, l'utilisateur n'est pas contraint d'interroger la base de données selon un langage propre à celle-ci. Sa requête peut être convertie dans un autre langage.

Selon le procédé, l'interrogation de la base de données se fait en deux temps. En préalable, la requête de l'utilisateur est analysée pour déterminer le ou les objets visés et pour déterminer les propriétés à extraire de la base de données concernant ces objets. Ensuite, dans un premier temps, on recherche à simplifier le mode d'interrogation de la base de données en se restreignant aux objets identifiés dans la requête. Enfin, dans un second temps, la base de données est interrogée, dans son langage (par exemple SQL), sur les propriétés à extraire grâce à la vue restreinte de la base de données.

La représentation de la base de données peut être obtenue à la volée auprès de la base de données à chaque interrogation de l'utilisateur. Elle peut également être obtenue par raffinement d'une représentation déjà existante, par exemple obtenue lors d'une requête précédente de l'utilisateur.

Ainsi, le procédé peut comporter en outre une mise à jour de la représentation, cette mise à jour comportant les étapes suivantes:
- de génération, à partir dudit au moins un objet, d'au moins une troisième requête dans ledit deuxième langage visant à parcourir la base de données,
- d'interrogation de la base de données au moyen de ladite au moins une troisième requête afin d'obtenir des informations sur la structure de la base de données, et
- de détermination, à partir desdites informations obtenues, de ladite représentation de la base de données.

Selon cette mise à jour, l'interrogation de la base de données est toujours adaptée à la structure courante de la base de données. Ainsi, contrairement aux librairies ou aux API de l'art antérieur, avant d'interroger la base de données pour obtenir les informations requises, on extrait de celle-ci des informations permettant de connaitre sa structure (qui peut évoluer au cours du temps par ajout et/ou suppression de tables, de relations entre les tables, de clés ou autre). Il est ainsi possible de déterminer une requête pertinente et efficace pour l'interrogation finale de la base de données.

La première interrogation de la base de données pour déterminer la représentation de la base de données peut s'entendre comme une mise à jour de celle-ci.

Par exemple, les informations sur la structure sont obtenues à partir d'un parcours de graphe.

Les algorithmes de parcours de graphes offrent une solution performante à l'analyse complète de la base de données qui peut être formalisée comme un graphe de tables avec des liens entre elles. En outre, la connaissance du ou des objets d'intérêt pour l'utilisateur permet d'optimiser le parcours en focalisant celui-ci sur ce ou ces objets.

Afin d'optimiser le nombre d'accès à la base de données, le procédé peut comporter en outre, préalablement à l'étape de génération de ladite au moins une deuxième requête, une étape de vérification de ladite représentation afin de déterminer si elle comporte ledit au moins un objet de la première requête, et dans lequel la mise à jour est mise en oeuvre si la représentation de la base de données ne comporte pas ledit au moins un objet.

Ainsi, la mise à jour de la représentation restreinte de la base de données est conditionnée par le besoin de connaître une propriété d'un nouvel objet. Ce conditionnement peut être mis en oeuvre, par exemple, pour le cas où la représentation restreinte de la base de données est mémorisée pour être utilisée pour plusieurs requêtes de l'utilisateur afin de limiter les accès à la base de données.

Par exemple, lesdites informations sur la structure de la base de données comportent une liste comportant au moins une table de la base de données relative audit au moins un objet.

La liste peut aussi comporter au moins une table d'association entre plusieurs tables de la liste.

La connaissance des tables de la base de données, et de leurs association (ou relation) permet de déterminer les clés (primaires ou secondaires) à utiliser pour extraire les propriétés requises par l'utilisateur dans la première requête.

Le procédé peut en outre comporter une étape d'exécution d'au moins une opération sur au moins une partie des tables de ladite liste pour déterminer ladite représentation de la base de données.

Ce ou ces opérations sont par exemple des opérations de base telles que des jointures, des projections et/ou des restrictions ou autre. Ce ou ces opérations sont par exemple des combinaisons de telles opérations de base.

Ainsi, la représentation est plus facile à manipuler pour déterminer la deuxième requête puisque les informations contenues dans la représentation sont plus pertinentes et moins nombreuses.

Le procédé peut en outre comporte les étapes suivantes de :
- formatage d'un résultat de la deuxième interrogation, et
- envoi dudit résultat formaté.

Ainsi, le résultat peut être rendu plus conforme au langage utilisé par l'utilisateur dans la première requête.

La base de données est par exemple une base de données relationnelle. Ainsi, l'association entre les objets visés dans la première requête et les tables de la base est plus simple à déterminer.

Le premier langage est par exemple un langage pseudo naturel, ce qui permet à l'utilisateur de ne pas avoir à formaliser sa requête selon le langage spécifique de la base de données.

Le procédé selon le premier aspect peut par exemple être mis en oeuvre par un interpréteur de requêtes. Cet interpréteur peut être mis en oeuvre par des moyens informatiques disposés entre la base de données et le terminal de l'utilisateur. Cet interpréteur peut également être intégré à la base de données ou au terminal utilisateur.

Un **deuxième aspect** de l'invention concerne un programme d'ordinateur ainsi qu'un produit programme d'ordinateur et un support de stockage pour de tels programme et produit, permettant la mise en oeuvre d'un procédé selon le premier aspect de l'invention, lorsque le programme est stocké dans une mémoire d'un dispositif d'interrogation de base de données, tel qu'un interpréteur de requêtes et exécuté par un processeur d'un tel dispositif.

Un **troisième aspect** de l'invention concerne un dispositif d'interrogation de base de données configuré pour la mise en oeuvre d'un procédé selon le premier aspect de l'invention.

Un tel dispositif comporte :
- une unité de communication configurée pour recevoir une première requête dans un premier langage visant l'obtention d'informations contenues dans la base de données, ladite requête visant au moins un objet ayant au moins une propriété représentée dans la base de données, et pour interroger la base de données au moyen d'au moins une deuxième requête, et
- une unité de traitement configurée pour accéder à une représentation de la base de données restreinte audit au moins un objet, et pour générer, à partir de ladite représentation et de ladite au moins une propriété de la première requête, ladite au moins une deuxième requête dans un deuxième langage visant à obtenir les informations requises dans la première requête.

Le dispositif peut en outre comporter une unité de mémoire configurée pour stocker ladite représentation de la base de données.

Selon des modes de réalisation :
- l'unité de traitement est en outre configurée pour mettre à jour ladite représentation, cette mise à jour comportant la génération, à partir dudit au moins un objet, d'au moins une troisième requête dans ledit deuxième langage visant à parcourir la base de données, et la détermination, à partir d'informations sur la structure de la base de données obtenues, de ladite représentation de la base de données, et
- l'unité de communication est en outre configurée pour interroger la base de données au moyen de ladite au moins une troisième requête (308) afin d'obtenir lesdites informations.

Les objets selon les deuxième et troisième aspects de l'invention procurent au moins les mêmes avantages que ceux procurés par le procédé selon le premier aspect. Le dispositif selon le troisième aspect peut comporter des moyens pour la mise en oeuvre de caractéristiques optionnelles évoquées pour le premier aspect en termes de procédé.

D'autres caractéristiques et avantages de l'invention apparaîtront à la lecture de la présente description détaillée qui suit, à titre d'exemple non limitatif, et des figures annexées parmi lesquelles :
- La **figure 1** illustre un exemple de contexte général de mise en oeuvre d'un mode de réalisation de l'invention ;
- La **figure 2** illustre des tables d'une base de données ;
- la **figure 3** est un diagramme d'échange et d'étapes mis en oeuvre dans un mode de réalisation; et
- la **figure 4** illustre schématiquement un dispositif selon un mode de réalisation de l'invention.

Dans la description qui suit, il est proposé une interface d'interrogation intuitive, accessible aux utilisateurs par un langage naturel ou pseudo naturel et qui peut s'adapter à leurs besoins en masquant la complexité de la structure de données.

En d'autres termes, l'utilisateur émet, via l'interface, des interrogations vers la base de données sans connaître les détails de la structure de la base, en indiquant les informations désirées (par exemple identification d'un objet et des propriétés que l'utilisateur souhaite extraire de la base de données) et des relations logiques entre ces informations (par exemple du type « ET »/« OU »).

L'interface permet de transcrire une requête de l'utilisateur dans un langage simple en un ensemble de requêtes plus complexes dans le langage de la base de données selon la structure de celle-ci. Cette interface peut donc faire office d'interpréteur permettant de simplifier l'interrogation de la base de données pour l'utilisateur.

La présente invention trouve des applications dans les systèmes pour lesquels il existe pour les utilisateurs un besoin d'accéder à une information contenue dans une base de données sans pour autant connaître le langage approprié (par exemple SQL) ou encore la structure complète de la base de données.

La description qui suit se place dans le cadre des systèmes et réseaux de calcul hautes performances (désignés sous l'appellation « HPC clusters » en terminologie anglo-saxonne, HPC étant le sigle de « *High Performance Computing* »).

Ces « clusters » sont généralement couplés à des SGBD pour stocker la grande quantité d'informations relatives au grand nombre d'équipements qui les composent. L'administrateur du « cluster » n'a pas comme activité principale la maintenance du SGBD. Sa tâche consiste plutôt à gérer le cluster en lui-même. Les informations contenues dans le SGBD sont pour lui des outils pour sa tâche. Cet administrateur doit pouvoir accéder aux informations contenues dans le SGBD de manière flexible, rapide, et intuitive, sans se soucier de la structure de celle-ci. L'accès à ces informations ayant, en général, comme objectif de diagnostiquer un problème dans le « cluster » ou éventuellement de l'anticiper.

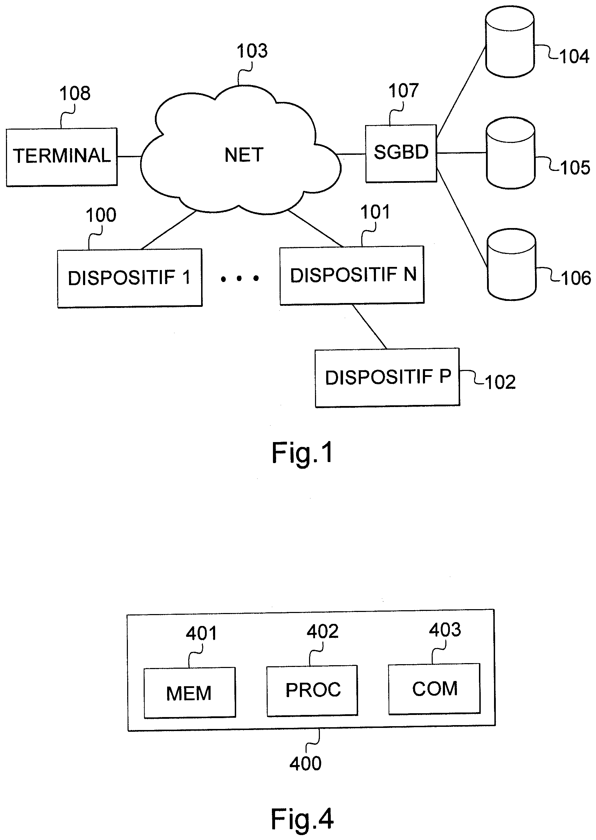

La **figure 1** illustre un contexte de mise en oeuvre de l'invention dans ce cadre.

Des équipements 100, 101, 102 (alimentations, dispositifs de refroidissement, calculateurs ou autre) en grand nombre sont connectés entre eux directement ou via un réseau 103. Ces équipements sont répertoriés dans une ou plusieurs bases de données 104, 105, 106 permettant de connaître l'état du réseau et des équipements qui lui sont connectés (directement ou indirectement). Ces bases de données sont gérées par un système de gestion de bases de données 107.

Les inventeurs ont constaté que dans ce type d'environnement, l'accès aux informations est différent pour les différents utilisateurs connectés au réseau via un terminal 108, typiquement un ordinateur. Par exemple, un administrateur système a typiquement besoin de données telles que celles concernant les machines composant son environnement, sur les systèmes d'exploitation, l'état des systèmes de fichiers ou autre. Un administrateur réseau a quant à lui typiquement besoin de statistiques concernant les commutateurs, l'état des ports de du réseau qu'il administre.

Afin de comprendre une situation complexe d'un réseau ou d'un système, il peut aussi être nécessaire de réaliser des recoupements sur ces données. Cela nécessite donc la mise en place de relations entre diverses données contenues dans les bases de données.

Chaque utilisateur devrait donc pouvoir accéder simplement aux seules données qui l'intéressent sans être confronté à des données qui ne sont pas pertinentes pour lui.

Dans la suite, il est considéré qu'un utilisateur souhaite accéder à des propriétés d'un objet décrit dans la base de données.

Un objet correspond par exemple à un élément déterminé dans la structure de données de la base. Il s'agit par exemple d'un dispositif, d'un groupe de dispositifs, ou autre. A un objet sont associés des propriétés. Il s'agit par exemple de son identification, de son type, de son modèle ou autre. Ces propriétés sont accessibles, à la demande et au choix, par construction d'une requête d'interrogation spécifique de la base de données.

Un sous-ensemble d'occurrences de l'objet est alors défini en se basant sur les critères de sélection définis par l'utilisateur.

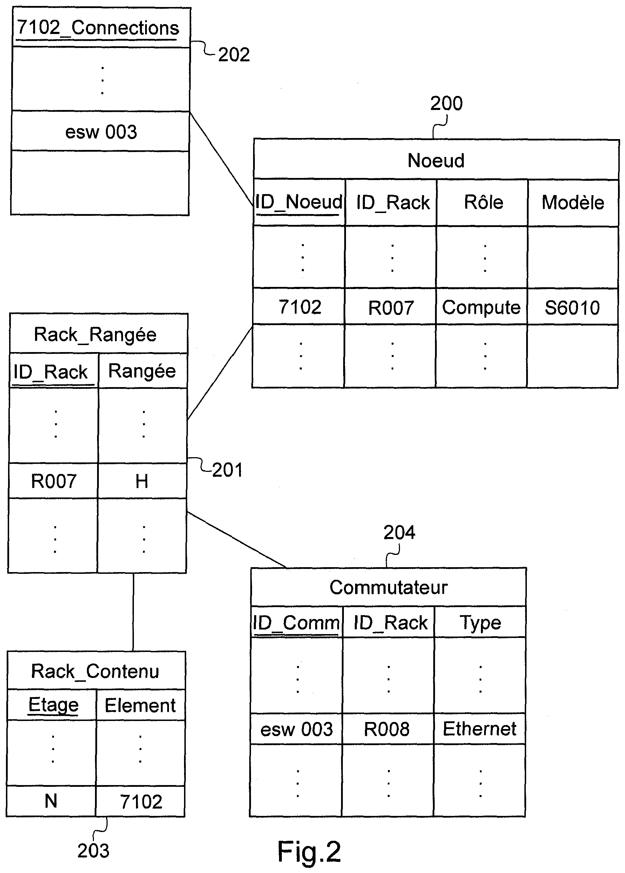

La **figure 2** illustre une base de données avec des tables (correspondant à des objets) et les liens qui relient ces tables. Des tables spécifiques (non représentées) peuvent par exemple contenir les différents liens qui relient les tables.

Dans la base de données, un objet est défini par une table « *primaire* » (par exemple un noeud de cluster), dans laquelle on trouve notamment ses propriétés intrinsèques et/ou ses connexions de premier niveau avec d'autres objets (par exemple un noeud connecté à un réseau).

A ces autres objets correspondent des tables « primaires », qui décrivent également leurs propriétés intrinsèques et qui sont utilisées comme tables « secondaires » pour enrichir les données du premier objet et, donc, la construction de la requête d'accès à toute l'information requise.

Une table 200 (« Noeud ») concerne les noeuds du réseau. Cette table regroupe plusieurs propriétés des noeuds (aussi appelées « attributs », « champs », ou « clés »).

La table 200 comporte les identifiants des noeuds (« ID_Noeud », ce champ constitue la clé primaire de la table, il est représenté souligné), les identifiants des armoires les contenant (« ID_Rack »), leur rôle (« Rôle ») leur modèle (« Modèle ») ou autre. A titre d'illustration, une ligne a été représentée concernant un noeud identifié sous le numéro « 7102 » appartenant à la rangée identifiée sous la référence « R007 » ayant un rôle identifié comme « compute » (c'est-à-dire un calculateur en anglais), et de modèle « S6010 ».

Une table 201 (« Rack_Rangée »), liée à la table 200, regroupe les différentes armoires du réseau et donne la rangée dans laquelle elles se trouvent géographiquement dans un centre de calcul (« *datacenter* » en anglais).

La table 201 comporte les identifiants des armoires (« ID_Rack », ce champ constitue la clé primaire de la table, il est représenté souligné) et les identifications des rangées (« Rangée »). A titre d'illustration une ligne a été représentée concernant l'armoire identifiée sous la référence « R007 » se trouvant dans la rangée « H ».

Une table 202 (« 7102_Connections »), liée à la table 200, regroupe l'ensemble des éléments connectés au noeud identifié sous le numéro « 7102 ». A titre d'illustration, il a été illustré la connexion avec un élément identifié par l'identifiant « esw003 ».

Une table 203 (« R007_Contenu »), liée à la table 201, regroupe l'ensemble des éléments (« Elément ») contenus dans l'armoire identifiée sous la référence « R007 » ainsi que le numéro de l'étage (« Etage », ce champ constitue la clé primaire de la table, il est représenté souligné) auxquels ils se trouvent. A titre d'illustration, une ligne a été représentée concernant le dernier étage « N » de l'armoire contenant le dispositif numéro « 7102 ».

Une table 204 (« Commutateur »), reliée à la table 201, concerne les commutateurs du réseau. Cette table regroupe les identifiants (« ID_Comm », ce champ constitue la clé primaire de la table, il est représenté souligné) des commutateurs, les identifiants (« ID_Rack ») des armoires dans lesquelles ils sont disposés et le type (« Type ») des commutateurs. A titre d'illustration, une ligne a été représentée concernant le commutateur ayant l'identifiant « esw003 » disposé dans l'armoire ayant la référence « R008 » de type « Ethernet ».

Dans un procédé selon l'invention, un logiciel interpréteur de l'interface peut avoir à sa disposition une vue virtuelle de la base de données restreinte à aux seuls éléments (tables et associations de tables) correspondant à la requête de l'utilisateur. Cette vue contient les champs correspondants à la sélection des données des diverses tables concernées par l'objet demandé. Les champs de ces tables sont sélectionnés automatiquement en se basant sur la liste des propriétés demandées par l'utilisateur.

Dans un environnement de bases de données relationnelles, des opérateurs "relationnels" sont disponibles. Par exemple, les opérations de jointure (implicite ou explicite) consistent à effectuer un produit cartésien entre des enregistrements de plusieurs tables. Afin de pouvoir traiter efficacement ce type d'opérations, l'interface proposée a connaissance de l'architecture interne (structure) de la base de données. Il s'agit des chemins de parcours entre les diverses tables (relations) afin d'obtenir les informations recherchées.

Dans le cas de jointures, la requête correspondant à la demande de l'utilisateur est créée de proche en proche par une méthode de parcours dans la base. On peut ainsi obtenir l'ensemble des propriétés intrinsèques de l'objet mais également l'ensemble des données en relations avec celui-ci via les tables liées.

La fonction de jointure n'est pas nécessaire pour accéder aux seules propriétés intrinsèques de l'objet. Il est possible de se limiter aux seules tables « primaires » si, dans un cas simple, le critère de sélection porte lui aussi sur les propriétés intrinsèques.

Le logiciel peut gérer les requêtes émises en langage pseudo naturel en offrant une vision objet d'une base de données relationnelle à la fois au niveau de l'interface et au niveau de l'implémentation. Un tel langage peut être du type <préfixe> <attribut>, où le préfixe correspond à l'identifiant de l'objet.

Un schéma d'implémentation pourrait être le suivant :
1. Analyser la requête utilisateur pour en extraire les données "structurantes" (c'est-à-dire celles équivalentes à une notion de nom d'objet / de table).
2. Analyser de manière dynamique la structure de la base de données afin de déterminer l'endroit où les informations utiles sont stockées et le, ou les, liens entre elles. Cette analyse peut se faire par génération d'un ensemble de requêtes SQL de type "parcours de graphes" permettant d'explorer la base de données et d'obtenir une description complète de la structure de celle-ci.
3. Retourner une vue virtuelle de la partie de la structure de la base de donnée "utile" en fonction des critères choisis par l'utilisateur lors de la soumission de sa requête. C'est-à-dire la partie restreinte aux objets visés dans la requête.
4. Analyser la structure restreinte afin d'auto-générer les requêtes SQL nécessaires à l'obtention des informations désirées par l'utilisateur. Les informations de structure obtenues précédemment et la requête utilisateur initiale sont utilisées.
5. Exécuter les requêtes SQL pour récupérer le ou les résultat(s) puis les analyser puis les formater afin de constituer la réponse pour l'utilisateur.

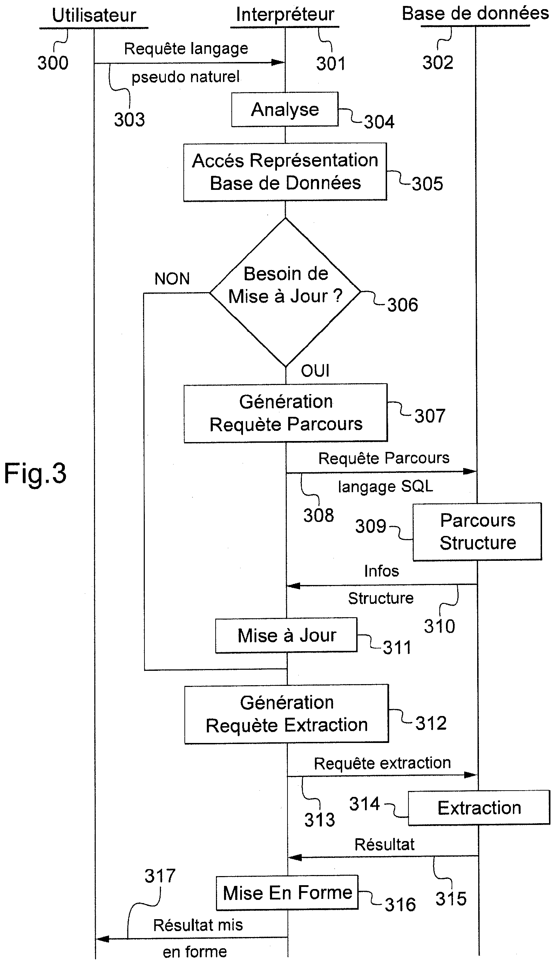

La **figure 3** représente un diagramme d'échange entre l'utilisateur 300, le logiciel interpréteur 301 (par exemple mis en oeuvre par le terminal utilisateur) et la base de données 302 (par exemple via un système de gestion de bases de données).

L'utilisateur émet une requête (303) en langage pseudo naturel comportant un ou plusieurs objets et une ou plusieurs propriétés concernant ce ou ces objets. L'interpréteur reçoit cette requête puis l'analyse (304).

Cette analyse vise à identifier les objets de la requête et les propriétés. Cette analyse vise également à identifier les liens logiques (« = », « ET », « OU » ou autre) entre ces objets et ces propriétés et les valeurs données par l'utilisateur.

L'interpréteur accède (305) ensuite à une représentation de la base de données qui se limite aux objets identifiés lors de l'analyse de la requête de l'utilisateur. Il détermine (306) alors s'il convient éventuellement de mettre à jour cette représentation, par exemple, parce qu'elle ne comporte pas assez d'éléments pour répondre à la requête de l'utilisateur. Une telle mise à jour peut aussi être décidée selon des critères d'âge de la représentation. Il peut y avoir besoin de mettre à jour la représentation régulièrement pour suivre les évolutions de la base de données.

Si une telle mise à jour est décidée (OUI), l'interpréteur génère (307) une ou plusieurs requêtes de parcours, en langage de la base de données (par exemple SQL) visant à parcourir la base de données, par exemple en mettant en oeuvre un algorithme de parcours de graphe pour connaître les tables et les associations de tables pertinentes pour répondre à la requête de l'utilisateur.

Ces requêtes (308) sont ensuite envoyées vers la base de données pour être exécutées (309).

Des résultats (310) de l'exécution des requêtes par la base de données sont ensuite reçus par l'interpréteur de la part de la base. Ces résultats, ou informations de structure, comportent par exemple une ou plusieurs listes de tables ou de tables d'association de la base de données.

L'interpréteur met ensuite à jour (311) la représentation de la base de données. Pour ce faire il peut mettre en oeuvre des opérations additionnelles de filtrage ou des opérations relationnelles pour éviter de corrompre la représentation existante ou pour éviter les doublons d'information.

L'interpréteur détermine les tables primaires de la base de données correspondant aux objets visés dans la requête, ainsi que les tables secondaires qui vont être utiles à l'élaboration de la requête d'extraction de la base de données.

L'interpréteur passe à l'étape de génération (312) d'une requête d'extraction de données de la base de données en fonction des informations de structure (310) reçues de la part de la base de données.

Une variable de travail peut être attribuée à chacune des tables et tous les champs nécessaires pour répondre à la requête de l'utilisateur peuvent être recomposés en les « préfixant » de la variable correspondant à la table sans laquelle est stockée la donnée à extraire.

Une jointure structurelle peut aussi être construite en liant les tables secondaires aux tables primaires au moyen des variables de travail. Une sélection peut également être effectuée sur une propriété primaire ou secondaire (selon une grammaire plus ou moins complexe combinant des liens « ET », « OU » ou autre) en « préfixant » la propriété par la variable de la table.

La requête est ensuite envoyée vers la base de données qui l'exécute (314). L'interpréteur reçoit ensuite le résultat (315) de l'exécution de la requête et le met éventuellement en forme (316) avant de le transmettre (317) à l'utilisateur.

Les parties extraites de la base de données (propriétés, jointures, sélections ou autre) peuvent être assemblées au moyen d'un langage glue (« *glue language* » en terminologie anglo-saxonne).

De retour à l'étape de décision de mise à jour (306), pour le cas où il a été décidé de ne pas mettre à jour la représentation (NON), l'interpréteur passe directement à l'étape (312) de génération de la requête d'extraction.

Etant donné la complexité de l'architecture des clusters actuels (plusieurs dizaines de milliers d'équipements), les requêtes d'interrogation de la base de données contenant la description, l'état, les informations de configuration, (ou autre) de l'ensemble de ces équipements, sont de plus en plus complexes.

Une requête d'utilisateur peut par exemple consister à obtenir la liste des noeuds situés au dernier étage des racks de la rangée référencée "H", de rôle "compute", de modèle "S6010", connectés sur le commutateur Ethernet nommé "esw0003".

Pour obtenir cette liste via des requêtes SQL, il serait nécessaire au préalable de connaître l'ensemble des tables contenant les informations relatives aux différents critères (noeud, commutateur Ethernet, position géographique, rôle). Plusieurs requêtes successives sur les différentes tables seraient alors nécessaires afin d'obtenir le résultat.

En utilisant une librairie, il serait nécessaire de faire appel à plusieurs fonctions différentes puis de réaliser un programme permettant d'analyser les résultats des fonctions utilisées pour d'obtenir la liste désirée.

Selon un mode de réalisation, l'utilisateur fournit la liste des critères désirés. L'interpréteur obtient ensuite la liste des tables à utiliser ainsi que les liens entre ces tables (via les clés primaires et secondaires de ces tables). L'interpréteur construit ainsi une vision "virtuelle" orientée objet permettant de décrire l'ensemble des objets à modéliser en fonction des critères d'entrée. Dans le cas présent, les objets de base sont : un noeud, un commutateur et un rack. La position géographique est un attribut (propriété) de l'objet rack, ainsi qu'un autre attribut de l'objet noeud et commutateur Ethernet. Le rôle est un attribut de l'objet noeud.

L'identification des tables nécessaires se fait par parcours de la structure de la base de données afin de sélectionner, dans le présent exemple, les tables : noeud, commutateur Ethernet, rack, position, rôle. Ceci de manière automatique du point de vue de l'utilisateur.

L'algorithme de recherche à implémenter en SQL pourrait s'exprimer en pseudo code de la manière suivante :

```
 pour tous les noeuds dans la base faire :
    si (noeud.type = "compute" et noeud.modèle="S6010") alors
        noeud_courant = noeud ;
        si (trouver_rack(noeud_courant).rangée = "H") alors
           si (position_rack(noeud_courant) = "top") alors
               si (existe(noeud_courant.commutateur) = "esw0003") alors
                   retourner noeud_courant ;
               finsi
           finsi
        finsi
    finsi
 finfaire
```

Pour une requête en langage pseudo naturel l'utilisateur n'a pas à faire une telle requête car celle-ci est auto-générée par l'interpréteur.

L'utilisateur peut par exemple entrer une requête du type:

```
        $ get_db_info
        get
              noeud.type="compute" ET
              noeud.modèle="S6010" ET
              rack.rangée="H" ET
              noeud.position="top" ET
              noeud.switch="esw0003"
```

Selon des modes de réalisation, la requête est fournie à l'interpréteur ce qui permet d'optimiser la phase d'analyse de la structure de la base de donnée et de la conserver en mémoire (ou alors implémenter la solution sur une base de client/serveur, le serveur pouvant conserver en mémoire la structure obtenue après un parcours complet de la base de données).

Cette requête étant la première reçue par l'interpréteur, la structure de la base de données parcourue est obtenue et enregistrée en mémoire.

Cela peut s'illustrer par la séquence suivante :

```
        > get
            noeud.type="compute" ET
            noeud.modèle="S6010"
```

Etant donné que cette requête ne fait appel à aucun objet qui ne fait pas partie de la structure en mémoire, le parcours de la base de données n'est pas ré-exécuté.

```
        > get
            pdu.type="apc" ET
           rack. rangée="H"
```

L'objet PDU (signe de « Power Distribution Unit » en anglais, c'est-à-dire unité de distribution d'énergie) n'est pas présent dans la représentation restreinte de la base de données en mémoire. Ainsi, la base de données est parcourue à nouveau afin de compléter la représentation de celle-ci avec l'objet PDU.

Un programme d'ordinateur pour la mise en oeuvre d'un procédé selon un mode de réalisation de l'invention peut-être réalisé à partir du diagramme de la figure 3 et de la présente description détaillée.

Un dispositif d'interrogation de base de données selon un mode de réalisation est décrit en référence à la **figure 4****.**

Le dispositif 400 de la figure 4 comporte une unité de mémoire 401 (MEM). Cette unité de mémoire comporte une mémoire vive pour stocker de manière non durable des données de calcul utilisées lors de la mise en oeuvre d'un procédé conforme à l'invention, selon divers modes de réalisation. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 402 (PROC) du dispositif. Par exemple, l'unité de mémoire stocke une représentation courante de la base de données. Le serveur de contrôle comporte par ailleurs une unité de communication 403 (COM) pour mettre en oeuvre des communications, notamment pour recevoir des requêtes de la part d'utilisateurs et renvoyer des requêtes vers une ou plusieurs bases de données.

Bien entendu, la présente invention ne se limite pas aux formes de réalisation décrites, d'autres variantes et combinaisons de caractéristiques sont possibles.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en oeuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé d'interrogation d'une base de données par des moyens informatiques comportant les étapes suivantes:
- de réception d'une première requête (303) dans un premier langage visant l'obtention d'informations contenues dans la base de données, ladite requête visant au moins un objet ayant au moins une propriété représentée dans la base de données,
- d'accès (305) à une représentation de la base de données restreinte audit au moins un objet,
- de génération (312), à partir de ladite représentation et de ladite au moins une propriété de la première requête, d'au moins une deuxième requête dans un deuxième langage visant à obtenir les informations requises dans la première requête, et
- d'interrogation de la base de données au moyen de ladite au moins une deuxième requête (313).

2. Procédé selon la revendication 1, comportant en outre une mise à jour de ladite représentation, cette mise à jour comportant les étapes suivantes:
- de génération (307), à partir dudit au moins un objet, d'au moins une troisième requête dans ledit deuxième langage visant à parcourir la base de données,
- d'interrogation de la base de données au moyen de ladite au moins une troisième requête (308) afin d'obtenir des informations sur la structure de la base de données (310), et
- de détermination (311), à partir desdites informations obtenues, de ladite représentation de la base de données.

3. Procédé selon la revendication 2, dans lequel la base de données est parcourue selon un parcours de graphe.

4. Procédé selon l'une des revendications 2 et 3, comportant en outre, préalablement à l'étape de génération de ladite au moins une deuxième requête, une étape de vérification (306) de ladite représentation afin de déterminer si elle comporte ledit au moins un objet de la première requête, et dans lequel la mise à jour est mise en oeuvre si la représentation de la base de données ne comporte pas ledit au moins un objet.

5. Procédé selon l'une des revendications 2 à 4, dans lequel lesdites informations sur la structure de la base de données comportent une liste comportant au moins une table de la base de données relative audit au moins un objet.

6. Procédé selon la revendication 5, dans lequel ladite liste comporte au moins une table d'association entre plusieurs tables de la liste.

7. Procédé selon l'une des revendications 5 et 6, comportant en outre une étape d'exécution d'au moins une opération sur au moins une partie des tables de ladite liste pour déterminer ladite représentation de la base de données.

8. Procédé selon l'une des revendications précédentes, comportant en outre les étapes suivantes de :
- formatage d'un résultat de la deuxième interrogation (316), et
- envoi dudit résultat formaté (317).

9. Procédé selon l'une des revendications précédentes, dans lequel la base de données est une base de données relationnelle.

10. Procédé selon l'une des revendications précédentes, dans lequel le premier langage est un langage pseudo naturel.

11. Procédé selon l'une des revendications précédentes mis en oeuvre par un interpréteur de requêtes.

12. Programme d'ordinateur comportant des instructions pour la mise en oeuvre d'un procédé selon l'une des revendications 1 à 11, lorsqu'il est exécuté par un processeur d'un dispositif d'interrogation de base de données.

13. Dispositif d'interrogation de base de données comportant :
- une unité de communication (403) configurée pour recevoir une première requête (303) dans un premier langage visant l'obtention d'informations contenues dans la base de données, ladite requête visant au moins un objet ayant au moins une propriété représentée dans la base de données, et pour interroger la base de données au moyen d'au moins une deuxième requête (313), et
- une unité de traitement (402) configurée pour accéder (305) à une représentation de la base de données restreinte audit au moins un objet, et pour générer (312), à partir de ladite représentation et de ladite au moins une propriété de la première requête, ladite au moins une deuxième requête dans un deuxième langage visant à obtenir les informations requises dans la première requête.

14. Dispositif selon la revendication 13, comportant en outre une unité de mémoire (401) configurée pour stocker ladite représentation de la base de données.

15. Dispositif selon l'une des revendications 13 et 14, dans lequel :
- l'unité de traitement est en outre configurée pour mettre à jour ladite représentation, cette mise à jour comportant la génération (307), à partir dudit au moins un objet, d'au moins une troisième requête dans ledit deuxième langage visant à parcourir la base de données, et la détermination (311), à partir d'informations sur la structure de la base de données obtenues, de ladite représentation de la base de données, et
- l'unité de communication est en outre configurée pour interroger la base de données au moyen de ladite au moins une troisième requête (308) afin d'obtenir lesdites informations (310).

## Patentansprüche

1. Verfahren zur Abfrage einer Datenbank durch computertechnische Einrichtungen, die folgenden Schritte umfassend:
- Empfangen einer ersten Anforderung (303) in einer ersten Sprache, die auf den Erhalt von Informationen abzielt, die in der Datenbank enthalten sind, wobei die Anforderung auf mindestens ein Objekt abzielt, das mindestens eine in der Datenbank dargestellte Eigenschaft hat,
- Zugreifen (305) auf eine Darstellung der Datenbank, die auf das mindestens eine Objekt beschränkt ist,
- Generieren (312), und zwar aus der Darstellung und der mindestens einen Eigenschaft der ersten Anforderung, mindestens einer zweiten Anforderung in einer zweiten Sprache, die auf den Erhalt von erforderlichen Informationen in der ersten Anforderung abzielt, und
- Abfragen der Datenbank mittels der mindestens einen zweiten Anforderung (313).

2. Verfahren nach Anspruch 1, darüber hinaus eine Aktualisierung der Darstellung umfassend, wobei diese Aktualisierung die folgenden Schritte umfasst:
- Generieren (307), und zwar aus dem mindestens einen Objekt, mindestens einer dritten Anforderung in der zweiten Sprache, die darauf abzielt, die Datenbank zu durchsuchen,
- Abfragen der Datenbank mittels der mindestens einen dritten Anforderung (308), um Informationen über die Struktur der Datenbank zu erhalten (310), und
- Bestimmen (311), und zwar ausgehend von den erhaltenen Informationen, der Darstellung der Datenbank.

3. Verfahren nach Anspruch 2, wobei die Datenbank entlang einem Graphenpfad durchsucht wird.

4. Verfahren nach einem der Ansprüche 2 und 3, darüber hinaus vor dem Schritt des Generierens der mindestens einen zweiten Anforderung, einen Schritt der Verifizierung (306) der Darstellung umfassend, um zu bestimmen, ob sie das mindestens eine Objekt der ersten Anforderung enthält, und wobei die Aktualisierung umgesetzt wird, wenn die Darstellung der Datenbank das mindestens eine Objekt nicht umfasst.

5. Verfahren nach einem der Ansprüche 2 bis 4, wobei die Informationen über die Struktur der Datenbank eine Liste umfassen, die mindestens eine auf das mindestens eine Objekt bezogene Tabelle der Datenbank umfasst.

6. Verfahren nach Anspruch 5, wobei die Liste mindestens eine Zuordnungstabelle zwischen mehreren Tabellen der Liste umfasst.

7. Verfahren nach einem der Ansprüche 5 und 6, darüber hinaus einen Schritt der Ausführung mindestens einer Operation an mindestens einem Teil der Tabellen der Liste umfassend, um die Darstellung der Datenbank zu bestimmen.

8. Verfahren nach einem der vorhergehenden Ansprüche, darüber hinaus die folgenden Schritte umfassend:
- Formatieren eines Ergebnisses der zweiten Abfrage (316), und
- Verschicken des formatierten Ergebnisses (317).

9. Verfahren nach einem der vorhergehenden Ansprüche, wobei die Datenbank eine relationale Datenbank ist.

10. Verfahren nach einem der vorhergehenden Ansprüche, wobei die erste Sprache eine pseudonatürliche Sprache ist.

11. Verfahren nach einem der vorhergehenden Ansprüche, das durch einen Abfrageinterpretierer umgesetzt wird.

12. Computerprogramm mit Instruktionen zur Umsetzung eines Verfahrens nach einem der Ansprüche 1 bis 11, wenn es durch einen Prozessor einer Datenbankabfragevorrichtung ausgeführt wird.

13. Datenbankabfragevorrichtung, umfassend:
- eine Kommunikationseinheit (403), die dazu konfiguriert ist, eine erste Anforderung (303) in einer ersten Sprache zu empfangen, die auf den Erhalt von Informationen abzielt, die in der Datenbank enthalten sind, wobei die Anforderung auf mindestens ein Objekt abzielt, das mindestens eine in der Datenbank dargestellte Eigenschaft hat, und die Datenbank mittels mindestens einer zweiten Anforderung (313) abzufragen, und
- eine Verarbeitungseinheit (402), die dazu konfiguriert ist, auf eine Darstellung der Datenbank zuzugreifen (305), die auf das mindestens eine Objekt beschränkt ist, und aus der Darstellung und der mindestens einen Eigenschaft der ersten Anforderung die mindestens eine zweite Anforderung in einer zweiten Sprache zu generieren (312), die auf den Erhalt von erforderlichen Informationen in der ersten Anforderung abzielt.

14. Vorrichtung nach Anspruch 13, darüber hinaus eine Speichereinheit (401) umfassend, die dazu konfiguriert ist, die Darstellung der Datenbank zu speichern.

15. Vorrichtung nach einem der Ansprüche 13 und 14, wobei:
- die Verarbeitungseinheit darüber hinaus dazu konfiguriert ist, die Darstellung zu aktualisieren, wobei diese Aktualisierung das Generieren (307), und zwar aus dem mindestens einem Objekt, mindestens einer dritten Anforderung in der zweiten Sprache, die darauf abzielt, die Datenbank zu durchsuchen, und die Bestimmung (311), und zwar aus erhaltenen Informationen über die Struktur der Datenbank, der Darstellung der Datenbank umfasst, und
- die Kommunikationseinheit darüber hinaus dazu konfiguriert ist, die Datenbank mittels der mindestens einen dritten Anforderung abzufragen (308), um die Informationen zu erhalten (310).

## Claims

1. Method for querying a database by computer means, comprising the following steps:
- receiving a first request (303) in a first language, aimed at obtaining information contained in the database, said request being directed to at least one object having at least one property represented in the database,
- accessing (305) a representation of the database restricted to said at least one object,
- generating (312), from said representation and said at least one property of the first request, at least one second request in a second language, aimed at obtaining the information requested in the first request, and
- querying the database by means of said at least one second request (313).

2. Method according to claim 1, further comprising updating said representation, said update comprising the following steps:
- generating (307), from said at least one object, at least one third request in said second language, aimed at scanning the database,
- querying the database by means of said at least one third request (308) in order to obtain information on the structure of the database (310), and
- determining (311) said representation of the database from said obtained information.

3. Method according to claim 2, wherein the database is scanned according to a graph traversal.

4. Method according to one of claims 2 and 3, further comprising, prior to the step of generating said at least one second request, a step of verifying (306) said representation in order to determine whether it comprises said at least one object of the first request, and wherein the update is carried out if the representation of the database does not comprise said at least one object.

5. Method according to one of claims 2 to 4, wherein said information on the structure of the database comprises a list comprising at least one table of the database related to said at least one object.

6. Method according to claim 5, wherein said list comprises at least one association table between a plurality of tables of the list.

7. Method according to one of claims 5 and 6, further comprising a step of executing at least one operation on at least one part of the tables of said list in order to determine said representation of the database.

8. Method according to one of the preceding claims, further comprising the following steps:
- formatting a result of the second query (316), and
- sending said formatted result (317).

9. Method according to one of the preceding claims, wherein the database is a relational database.

10. Method according to one of the preceding claims, wherein the first language is a natural pseudo language.

11. Method according to one of the preceding claims, carried out by a request interpreter.

12. Computer program comprising instructions for carrying out a method according to one of claims 1 to 11 when said program is executed by a processor of a database query device.

13. Database query device, comprising:
- a communications unit (403) configured to receive a first request (303) in a first language, aimed at obtaining information contained in the database, said request being directed to at least one object having at least one property represented in the database, and to query the database by means of at least one second request (313), and
- a processing unit (402) configured to access (305) a representation of the database restricted to said at least one object, and to generate (312), from said representation and said at least one property of the first request, said at least one second request in a second language, aimed at obtaining the information requested in the first request.

14. Device according to claim 13, further comprising a memory unit (401) configured to store said representation of the database.

15. Device according to one of claims 13 and 14, wherein
- the processing unit is also configured to update said representation, said update comprising generating (307), from said at least one object, at least one third request in said second language, aimed at scanning the database, and determining (311) said representation of the database from said information obtained on the structure of the database, and
- the communications unit is also configured to query the database by means of said at least one third request (308) in order to obtain said information (310).
